# EUROPEAN PATENT SPECIFICATION

(11) **EP 1 641 865 B1**
(45) Date of publication and mention of the grant of the patent: **17.03.2010**
(21) Application number: 04731035.4
(22) Date of filing: 04.05.2004
(51) Int. Cl.: C08J 5/12, B29C 65/48

(54) **PROCESS FOR SEALING PVOH**
VERFAHREN ZUM VERSIEGELN VON POLYVINYLALKOHOL
PROCEDE POUR SCELLER UN ALCOOL POLYVINYLIQUE

(30) Priority: 03.05.2003 GB 0310293
(43) Date of publication of application: 05.04.2006
(73) Proprietor: Reckitt Benckiser (UK) Limited, Slough, Berkshire SL1 3UH (GB)
(72) Inventor: DUFFIELD, P. J., Reckitt Benckiser Corp. Serv. Ltd, East Yorkshire HU8 7DS (GB); EDWARDS, David Brian, Hertfordshire SG2 7HG (GB)
(74) Representative: Bowers, Craig Malcolm
(86) International application number: PCT/GB2004/001898
(87) International publication number: WO 2005/121225

(56) References cited:
- EP-A- 0 110 603
- WO-A-2004/009335
- GB-A- 1 232 268
- US-A- 4 581 875
- US-A1- 2003 036 494
- DATABASE WPI Section Ch, Week 199246 Derwent Publications Ltd., London, GB; Class A14, AN 1992-377293 XP002292424 & JP 04 277580 A (AICA KOGYO CO LTD) 2 October 1992 (1992-10-02)

## Description

The present invention relates to a process for sealing a first water-soluble member to a second water-soluble member which is especially suitable for use, for example, in the preparation of water-soluble containers.

Water-soluble members are usually sealed to other water-soluble members by heat-sealing, especially when the members comprise poly(vinyl alcohol) (PVOH). This involves the application of heat and pressure for a few seconds over the part to be sealed as disclosed in, for example, GB-A-2,244,258 and EP-A-577,753. While heat sealing can often provide an adequate seal strength, the seal itself can be unsightly and hard, since the polymeric can harden or crystallise under the sealing conditions. Furthermore the heat-sealing technique can only be used to seal members of a certain shape, such as thin films.

Although other methods of sealing such members together can be used, such as solvent sealing, it has proved to be difficult if not impossible to use solvent sealing as an industrial method. It is possible to coat a solvent, such as water, onto one or both of the surfaces to be sealed, by a roller or other similar means. However, this takes time leading to a poor throughput, and may also require expensive apparatus. Furthermore the mechanical action between the rollers and the members may damage the members.

Additionally, such a coating method cannot be used in some instances, for example where the surfaces to be joined are not planar or have a convoluted shape, or when both members are large and flexible, for example when laminating films.

JP 53-26868 describes methods of improving sealing of water-soluble resin film by moistening the film prior to heat sealing.

EP-A- 0 110 603 discloses a process for sealing a gelatine capsule comprising the steps of high frequency jet-spraying an aqueous composition to the surfaces to be bonded and joining the surfaces.

US 4581875 describes a method of sealing gelatine capsules by spraying a heated steam jet over one of the gelatin capsule parts prior to sealing.

We have tried to overcome these problems by applying water as a solvent in the form of a spray of ambient temperature water droplets from a conventional aerosol. However, it was impossible to achieve a good seal in a short period in most cases. When a seal was obtained, it had such poor initial strength that the seal was useless for commercial applications. Good seals can be obtained by allowing the seal to fully dry. However, commercial production techniques do not allow for long drying periods to resolve sealing issues.

We have now surprisingly found that a seal with adequate strength can be achieved so long as the aqueous composition is applied in the form of drops having a controlled droplet size. This produce excellent initial tack between the two members being sealed such that a robust seal is quickly achieved allowing for handling of the product soon after contact of the two members.

Accordingly the present invention provides a process for sealing a surface of a first water-soluble member to a surface of a second water-soluble member, wherein an atomised aqueous composition is applied to at least one of the surfaces and the surfaces are contacted together to form a seal, characterised in that the atomised aqueous composition has a mean volume diameter Dv(50) of less than 40µm, wherein the first and second water-soluble member is a water-soluble poly(vinyl/alcohol) member, and wherein the first or second member is a film, wherein the atomised aqueous composition is applied in the form of a mist.

It has surprisingly been discovered that a seal with adequate strength can be formed by the process of the present invention, ideally in a short period of time (less than 2 mins, 1 min, 50 seconds, 40 seconds, 30 seconds, 10 seconds, 5 seconds or 1 second).

Furthermore the process of the present invention allows for the sealing of components together without heating if this is desired. This may allow for a greater throughput of sealed components since less time may be required in the sealing step than is the case with heat sealing, where a dwell time of several seconds may be necessary. It may also facilitate the sealing of components for which a lower sealing temperature is desirable.

The process may have particular application in the preparation of laminated films, comprising one or more water-soluble films.

It has also surprisingly been found that the process of the present invention can provide a seal with reduced polymer crystallinity as compared to a heat seal. Since crystalline polymer materials have longer dissolution times compared to their amorphous equivalents, this may allow an increased dissolution speed of the seal area.

It is an essential aspect of the process of the present invention that the aqueous composition is applied in an atomised form. Thus the droplets are smaller than those obtained, for example, by conventional aerosols. Atomised aqueous compositions generally have a distribution of droplet sizes, which can be characterised by volume diameter (Dv). The distribution can be defined by using the Dv(10), Dv(50) and Dv(90) values. In the present invention, the atomised aqueous composition may, for example, have a Dv(50) less than 35µm , and more preferably from 10µm to 20µm. Additionally the aqueous composition may have a Dv(90) of less than 150µm, preferably less than 100µm, and more preferably from 30µm to 45µm. Additionally the aqueous composition may have a Dv(10) of less than 20µm, preferably less than 15µm , and more preferably from 1µm to 10µm. Dv values can be determined using laser particle size determination equipment such as the Mastersizer-S produced by Malvern Instruments, Malvern, UK.

The droplet size is a function of the atomiser type, the physical characteristics of the fluid used, the fluid and air pressure and the fluid air temperature.

Unlike conventional solvent sealing, we have found that the aqueous composition when applied as atomised droplets onto the water-soluble member should not dissolve, or make the surface tacky to the touch, of at least one of the first member and the second member. Preferably the surface of at least one of the first should feel the same to the touch before and after treatment. Ideally, the increase in the water content of the water-soluble member after treatment is less than 25% wwt, 20% wt, 15% wt, 10% wt or 5% wt.

The aqueous composition used in the process of the present invention is applied in the form of atomised droplets to at least one of the surfaces of the first member and second member before said surfaces are sealed together. Preferably the aqueous composition is applied to both surfaces.

The composition can be applied only to the area which is to be sealed or over a smaller or larger area of the first member and/or second member.

The aqueous composition can be applied by any means so long as it contacts the surface to be sealed while it is in the form of atomised droplets. Thus it can, for example, be applied by applying a mist of atomised droplets of the composition in the vicinity of the surface. The mist may be, for example, an atomised composition produced by, for example, an aerosol, spray air-atomising nozzles, highpressure hydraulic nozzles, piezolelectric atomisers, electrostatic atomisers, ultrasonic atomisers or other atomising means. If the droplets have a size which is too large, their size may be reduced by any means, or the droplets may be eliminated, such as by the use of baffles or a screen such as a wire mesh. It may also be in the form of a composition having a temperature below its boiling point, such as steam, such as "room temperature" steam from electrostatic or ultrasonic generators or conventional steam. Mean volume diameter Dv(50) of conventional steam is between 5µm and 30µm.

Preferably the at least one water-soluble member to be sealed is passed through an environment in which a mist of atomised droplets of the composition, as described herein, is present.

By use of the term "mist" it meant an aqueous vapour of droplets with a small enough diameter to remain suspended in air for an extended period by Brownian motion. Preferably the mean volumetric diameter, Dv(50), should be from 15 to 25.

It may be advantageous to take steps to avoid air drafts during the sealing step, for example drafts caused by the atomisation. For example, a volume of slower moving air may be induced, for example using a venturi arrangement as an "air-damper" around the atomiser.

The sealing process of the present invention can be carried out at any desired temperature. For example, the atomised aqueous composition may have a temperature of less than room temperature (20°C), about room temperature, or above room temperature.

Preferably the temperature of the aqueous composition is from 4 to 60°C, more preferably 10 to 40°C, even more preferably from 15 to 30°C. Most preferably the temperature of the aqueous composition is about room temperature (20°C) for ease of handling. The temperature of the aqueous composition may, for example, be above or below the temperature at which it starts to dissolve the first member and/or the second member.

The aqueous composition generally comprises at least 50 wt% water, preferably at least 60 wt% and more preferably at least 70 wt%, at least 80% or at least 90%. Most preferably the aqueous composition is dehardened, distilled, deionised or pure water, although it may contain minor amounts of impurities. For example, it may be tap water which has not necessarily undergone any purification, although it may, if desired, be purified by one or more techniques to remove heavy metals and complexing metals such as by reverse osmosis, ultra violet, magnetic or ozone treatment or by deionisation. The aqueous composition may, however, comprise other components such as a water soluble component such as a water soluble polymer. Suitable water soluble polymers are discussed above. Generally the water soluble component such as a water soluble polymer is the same as that constituting the first member and/or second member.

The aqueous composition may also comprise components which increase the surface tension, polarity or ionic strength of the composition to control the penetration of the composition into the first member and/or second member. For example it may comprise a salt such as an alkali metal salt, for example, lithium or sodium chloride or sodium citrate. Such salts are generally used in an amount of less than 1 wt%, although they may be used in larger amounts. For example the aqueous composition may be in the form of a saturated solution of a salt. In the case of lithium chloride this amounts to about 25 wt% lithium chloride in water.

It may also be beneficial for an electrostatic charge, for example a positive charge or a negative charge to be applied to the droplets to enhance the attraction to the polymer surface. The charge can occur naturally in view of the small size of the droplets and friction between the droplets when they are travelling at high speed, and plastic surfaces or other surfaces able to transfer an electrostatic charge during or after the dispensing action.

The aqueous composition is applied to the surface of the first member and/or second member before the members are contacted prior to sealing. The members may be contacted immediately after the aqueous composition is applied. Desirably, however, the aqueous composition is allowed to act on one or both of the members for a short while before the members are contacted, for example from 0.5 to 10 seconds, preferably from 1 to 5 seconds, more preferably from 1.5 to 2.5 seconds

In the process of the present invention, the first and second members may simply be contacted in order to seal them. Pressure may be used, for example a pressure of 100 to 500kPa , preferably 150 to 250kPa . Pressure may be applied for any time, for example from 0.5 to 5 seconds, preferably from 1.0 to 2.5 seconds. No heating of the first member or the second member is required. However, the first member and/or the second member may be heated if desired. Suitable temperatures to which either or both members are heated are 50 to 180°C, preferably 75 to 140°C.

After sealing, it is possible to apply heat to the seal in order to improve its strength, or to use another sealing means such as laser sealing. However, the use of additional sealing steps is generally to be avoided since they may adversely affect the stability of the seal.

The process of the present invention may, in a particular embodiment, be a modified version of a standard heat sealing process. Heat sealing is a well known technique and is discussed, for example, in WO 89/12587 and WO 92/17382 and in James L. Throne "Understanding Thermoforming" published by Carl Hanser Verlag, 1999. In such a process, a first member is sealed to a second member by placing the two members next to each other, applying heat to the side of at least one of the members, for example the first member or the second members, which is not in contact with the other member for a sufficient duration such that the surface of the member which is in contact with the other member becomes tacky, and applying pressure to seal the members together. In order to carry out heat sealing, it is necessary that at least one of the members is sufficiently thin to conduct heat to the surface which is to be sealed. This places some practical limitation on the thickness and conductivity of the member. Apart from this, it can have any other characteristics. For example it can be rigid or flexible.

In a heat sealing process the members are held together by means of a pressure plate pushing down against the parts of the combination which need to be heat sealed. If either the first member or the second member is in the form of a film, the pressure plate may, for example, push down in a direction towards the other member. The plate may be flat or may have, for example, a textured surface such as stipples. Heat is generally applied to the side of the member which is opposite the side which is in contact to the other member. Heat is generally applied by heating the pressure plate. However, it is also possible to use, for example, other heating means such as contact heaters or radial heaters. The sealing conditions depend on the machine and material used. Generally the sealing temperature is from 100 to 180°C. The pressure is usually from 1 to 5 bar (100 to 500 kPa). The dwell time is generally from 1.3 to 2.5 seconds.

The first member can be integral with the second member before they are sealed together. For example the first member and the second member can be different parts of a single member, such as a film, especially a PVOH film, which is heat sealed to itself.

The first water-soluble member and the second water-soluble member comprise PVOH.

Examples of preferred PVOHs are esterified or etherified PVOH. The PVOH may be partially or fully alcoholised or hydrolysed. For example it may be at least 40%, preferably from 70 to 92%, more preferably about 88% or about 92%, alcoholised or hydrolysed. The degree of hydrolysis is known to influence the temperature at which the PVOH starts to dissolve in water. 88% hydrolysis corresponds to a PVOH soluble in cold (ie room temperature) water, whereas 92% hydrolysis corresponds to a PVOH soluble in warm water. A preferred PVOH which can be further processed, for example by forming into a film or by moulding such as injection moulding, is sold in the form of granules under the name CP1210T05 by Soltec Developpement SA of Paris, France. By choosing an appropriate polymer it is possible to ensure that the water-soluble polymer dissolves at a desired temperature. Thus the PVOH member and/or the polymeric member may be cold water (20°C) soluble, but may be insoluble in cold water and only become soluble in warm or hot water having a temperature of, for example, 30°C, 40°C, 50°C or even 60°C.

Advantageously the first member and/or the second member, may be substantially anhydrous, that is contain less than 5 wt% water, preferably less than 2 wt% water. We have found that such members, particularly if they are in the form of films, are less liable to shrink on heating, for example during a thermoforming step.

It is possible for suitable additives such as plasticisers, lubricants and colouring agents to be added. Components which modify the properties of the polymer may also be added. Plasticisers are generally used in an amount of up to 20 wt%, for example from 10 to 20 wt%. Lubricants are generally used in an amount of 0.5 to 5 wt%. The polymer is therefore generally used in an amount of from 75 to 84.5 wt%, based on the total amount of the moulding composition. Suitable plasticisers are, for example, pentaerythritols such as depentaerythritol, sorbitol, mannitol, glycerine and glycols such as glycerol, ethylene glycol and polyethylene glycol. Solids such as talc, stearic acid, magnesium stearate, silicon dioxide, zinc stearate or colloidal silica may be used as lubricants.

It is also possible to include one or more particulate solids in the first member and/or the second member, especially if the member is injection moulded or thermoformed, in order to accelerate the rate of dissolution of the member. Dissolution of the solid in water is sufficient to cause an acceleration in the break-up of the member or film, particularly if a gas is generated.

Examples of such solids are alkali and alkaline earth metal, such as sodium, potassium, magnesium and calcium, bicarbonate and carbonate, in conjunction with an acid. Suitable acids are, for example acidic substances having carboxylic or sulfonic acid groups or salts thereof. Examples are cinnamic, tartaric, mandelic, fumaric, maleic, malic, palmoic, citric and naphthalene disulfonic acids, as free acids or as their salts, for example with alkali or alkaline earth metals.

The first member and/or the second member may have any form. However, at least one, and optionally both, are in the form of films. In general each film has a thickness of from 20 to 160µm, preferably from 40 to 100µm, more preferably from 55 to 80µm for PVOH. These thicknesses also apply for other polymers, although other thicknesses may also be used depending on the conductivity, plasticity and Tg of the film.

If the first member or second member is not in the form of a film, it may have any thickness, shape or form since the sealing method of the present invention can be used to seal members having any size and shape. The first member or the second member may, for example, be rigid or flexible. The first member or second member may, for example, be in the form of a three-dimensional moulding. Each may, for example, have a thickness in the area of sealing of from 15µm to 30mm, preferably 30µm to 25mm, more preferably 80µm to 20mm. However, at least one, and optionally both, of the members is in the form of a film. If both members are in the form of a film, they may have the same or different thicknesses.

In a preferred aspect of the present invention, the sealing is carried out during a process to form a container. It is particularly preferred for one of the first member and the second member to be in the form of an open container, and the other to be in the form of a closure. The open container may, for example, be in the form of an injection moulded container or in the form of a thermoformed pocket in a film. The closure may be in the form of a rigid or semirigid closure, in the form of a film. Thus, for example, the process of the present invention may be used to prepare water-soluble injection moulded containers as disclosed in GB-A-2,358,382 or water-soluble thermoformed containers as disclosed in WO 00/55068. This embodiment is especially suited to PVOH films or laminates of PVOH films, for example with a cellulose derivative such as HPMC.

The first member or the second member is desirably in the form such that, when the film is sealed to it, there is provided a water-soluble container containing at least one composition. Thus the first or second member can, for example, be in the form of a film or sheet having a pocket therein. The pocket can be produced by a moulding technique, for example thermoforming, vacuum moulding, injection moulding or blow moulding.

If the member is integral with the film before they are sealed together, and in the form of a single film which is heat sealed to itself, a horizontal or vertical form fill sealing process can be carried out to provide envelopes containing a composition. Pillow packs can also be produced from two different films.

In one embodiment, the first or second member can be in the form of a more rigid moulding, for example produced by injection moulding or blow moulding. Such a moulding can be in the form of an open container which is filled with at least one composition and then sealed with at least one film by the process of the present invention. Such containers are disclosed, for example, in WO 01/36,290.

For example the container may be a water-soluble, injection-moulded container comprising at least two compartments, a first compartment containing a first composition and having a first opening closed by a first film and a second compartment containing a second composition and having a second opening closed by a second film, wherein the first film and the second film have the same or different water dissolution characteristics and neither, one or both dissolve before the walls of the container. One, some or all of the films may be sealed by the process of the present invention.

An injection moulded member forming a container has walls which generally have a thickness such that the container is rigid. For example, the outside walls and any inside walls may independently have a thickness of greater than 100µm, for example greater than 150µm or greater than 200µm, 300µm, 400µm, 500µm, 750µm or 1mm. Typically the thicknesses are from 200µm to 1,000µm, preferably 300µm to 500µm.

The container, whether made by injection moulding, thermoforming or any other process, may have any shape, but suitably is generally cuboid. The top wall may be formed by the sealing film and the side walls and base wall may be formed by the thermoformed or injection moulded part of the container, hereinafter sometimes referred to as the receptacle part.

The receptacle part may contain one or two or more compartments. For example it can contain 1, 2, 3, 4, 5 or 6 or more compartments. At least one or two, and preferable all, of the compartments have openings on the outside of the container. If there are more than one opening, the openings may independently be on any side of the container. Thus, for example, all of the openings may be on one side of the container. Alternatively, one side of the container may have one or more openings and at least one other side of the container may have one or more openings. For example, for a container with two openings, the openings may both be on the same or different sides of the container. If they are on different sides, the sides may be, for example, adjacent to or opposite each other. As a further example, for a container with three openings, the openings may all be on one side of the container, the openings may all be on different sides of the container, or the container may have one opening on one side and two openings on another side. These openings may be, for example, on adjacent or opposite sides of the container. As a yet further example, for a container with four openings, the openings may all be on one side of the container, the openings may all be on different sides of the container, or the container may have two openings on one side and two openings on another side, or the container may have two openings on one side and one opening on each of two other sides. These openings may be, for example, on adjacent or opposite sides of the container. Desirably, and especially when all of the openings are on one side of the container, the openings extend substantially across all of the face of the container except for that part of the face which is required as a surface for sealing the films to the container. Said part may be, for example, an inward or outward flange.

The dividing wall or walls of the container preferably terminate at the top of the receptacle part, i.e. in the same plane as the top edges of the side walls, such that when the receptacle part is closed by the sealing part the contents of the compartments cannot mix.

The container may be formed with an opening, for example a depression, formed in a side wall or in the base wall, and preferably being open in the outward direction. That is to say, it does not form part of the main volume defined by the container. Preferably the opening is adapted to receive, in a press-fit manner, a solid block, for example a tablet or ball, of a composition useful in a washing process. The opening may also receive a non-compressed composition, for example a gel, which is allowed to set in the opening. A composition held in such an opening may be released before the contents of the container are released.

If the first or second member is formed by injection moulding, it may be injection moulded at any suitable temperature. A suitable moulding temperature, especially for PVOH, is from 180°C to 220°C, depending upon the formulation selected and the melt flow required.

Each item, for example a container, may be individually moulded. It is also possible to mould the items in a conjoined line or a two dimensional array. If the items are in the form of containers, they are then filled with the desired compositions. Before or after the filling step it is possible, if desired, to separate individual containers if more than one container has been moulded together. If the containers have more than one compartment, each compartment may be filled with a composition. The compositions in each compartment may be the same or different. Each compartment may be filled simultaneously or at different times. If all of the compartments have openings on the same side, the compartments may all be filled at the same time. However, if the compartments have openings on different sides, they may need to be filled at different times, with the orientation of the container being changed in between the filling operations. It may also be necessary to seal the opening of the filled compartment before the orientation of the container is changed. For example, in order to fill a container in the form of a cuboid consisting of two compartments separated by an internal wall and having openings on opposite sides, the container is initially positioned with one opening upperwards, the compartment with the uppermost opening is filled and the opening is then sealed with a first film. The container is then turned upside down, and the operation repeated to fill the other compartment with a composition and then seal it with a second film.

If all of the compartments have openings on the same side of the container one film or a plurality of films may be used to seal the openings. However, if a single film is used to seal all the openings, or if the same film is used to seal all the openings at different times, at least part of the film must be treated or otherwise modified in order to ensure that at least two compartments are sealed with films having different dissolution characteristics.

When at least two different films are used to seal different openings, the films may have different dissolution characteristics from each other at the time of sealing, or the characteristics may be modified after the compartments have been sealed.

In order to ensure that films have different dissolution characteristics, the films may be chosen to dissolve at different temperatures. For example, the films may comprise PVOH polymers having different degrees of hydrolysis. The films may also be chosen to dissolve at different pHs. It is also possible to ensure that the films take different times to dissolve to achieve a sequential release of compositions from different compartments, even when the external environment of the containers has not changed. This may be achieved, for example, by using films which are of the same or different composition but which are of different thicknesses. It is also possible to treat one or more of the films after they have sealed the openings. For example, one or more of the films may be covered by another film. If this is the same film it will simply retard dissolution of the film. If is a different film, it may alter other dissolution properties. For example covering a cold water soluble film with a warm water soluble film will ensure that the resultant composite film will only dissolve in warm water.

If a single film is used, it is possible to treat at least part of the surface before or after it seals the openings of the container. Any of the above treatments may be used, alone or in combination.

The container can also be made from two films, one of the films constituting the water-soluble member. For example a suitable process comprises:
a. producing a pocket surrounded by a sealing portion in a film;
b. filling the pocket with the composition;
c. placing a film on top of the filled pocket and across the sealing portion; and
d. sealing the films together at the sealing portion by the process of the present invention.

The film in all embodiments of the present invention may be a single film, or a laminated film as disclosed in GB-A-2,244,258. While a single film may have pinholes, the two or more layers in a laminate are unlikely to have pinholes which coincide

The film may be produced by any process, for example by extrusion and blowing or by casting. The film may be unoriented, monoaxially oriented or biaxially oriented. If the layers in the film are oriented, they usually have the same orientation, although their planes of orientation may be different if desired.

The layers in a laminate may be the same or different. Thus they may each comprise the same polymer or a different polymer. Since the film is laminate is intended to be water-soluble, each of the layers should be water-soluble.

The thickness of the film used to produce the pocket is preferably 40 to 300 µm, more preferably 80 to 200 µm, especially 100 to 160 µm, more especially 100 to 150 µm and most especially 120 to 150 µm.

The pocket may be formed by, for example, vacuum forming or thermoforming. For example, in a thermoforming process the film may be drawn down or blown down into a mould. Thus, for example, the film is heated to the thermoforming temperature using a thermoforming heater plate assembly, and then drawn down under vacuum or blown down under pressure into the mould. One skilled in the art can choose an appropriate temperature, pressure or vacuum and dwell time to achieve an appropriate pocket. The amount of vacuum or pressure and the thermoforming temperature used depend on the thickness and porosity of the film and on the polymer or mixture of polymers being used. Thermoforming of films is a well-known technique; thermoforming of PVOH films is described in, for example, WO 00/55045.

A suitable forming temperature, especially for PVOH or ethoxylated PVOH is, for example, from 90 to 130°C, especially 90 to 120°C. A suitable forming pressure is, for example, 69 to 138kPa (10 to 20 p.s.i.), especially 83 to 117 kPa (12 to 17 p.s.i.). A suitable forming vacuum is 0 to 4 kPa (0 to 40 mbar), especially 0 to 2 kPa (0 to 20 mbar). A suitable dwell time is, for example, 0.4 to 2.5 seconds, especially 2 to 2.5 seconds.

While desirably conditions chosen within the above ranges, it is possible to use one or more of these parameters outside the above ranges, although it may be necessary to compensate by changing the values of the other two parameters.

After the pocket has been filled with the desired composition, a film is placed on top of the filled pocket and across the sealing portion, and the film are heat sealed together at the sealing portion by the process of the present invention. This film may be a single-layered film but is desirably laminated to reduce the possibility of pinholes allowing leakage through the film. The film may be the same or different as the film forming the pocket.

Desirably the covering film has a thickness which is less than that of the film used for forming a pocket because it would not generally be stretched so localised thinning of the sheet will not occur. It is also desirable to have a thickness which is less than that of the film used to form a pocket to ensure a sufficient heat transfer through the film to soften the base web if heat sealing is used.

The thickness of the covering film is generally from 20 to 160 µm, preferably from 40 to 100 µm, such as 40 to 80 µm or 50 to 60 µm.

The sealing films generally dissolve in water before the receptacle part of the container. The films therefore generally have thicknesses which are less than the wall thickness of the receptacle part. In general, the sealing film dissolves in water (at least to the extent of allowing the composition in the receptacle part to be partly or completely dissolved by the water) at 40°C in less than 5 minutes, preferably less than 2 minute.

It is possible for one or more of the sealing films to have incorporated therein a composition. Thus, for example, one or more of the films can themselves contain compositions formed in the films by a previous operation such as thermoforming or vertical form fill sealing as disclosed in, for example, WO 01/85898.

If the containers contain two or more compositions, they can have a particularly attractive appearance since the compositions, which may be identical or different, may be held in a fixed position in relation to each other. The compositions can be easily differentiated to accentuate their difference. For example, the compositions can have a different physical appearance, or can be coloured differently.

Thus the composition within the container, or an individual compartment, need not be uniform. For example, during manufacture the container or compartment could first be fed with a settable composition, for example, a gel, and then with a different composition. The first composition could dissolve slowly in the washing process so as to deliver its charge over a long period within the washing process. This might be useful, for example, to provide an immediate, delayed or sustained delivery of an component such as a softening agent.

The compositions in each compartment may be the same or different. If they are different, they may, nevertheless, have one or more individual components in common.

The composition(s) which can be held in the container, or in each compartment of the container may independently be a fabric care, surface care or dishwashing composition. Thus, for example, they may be a dishwashing, water-softening, laundry or detergent composition, or a rinse aid. Such compositions may be suitable for use in a domestic washing machine. The compositions may also independently be a disinfectant, antibacterial or antiseptic composition, or a refill composition for a trigger-type spray. Such compositions are generally packaged in total amounts of from 5 to 100 g, especially from 15 to 40 g. For example, a laundry composition may weigh from 15 to 40g, a dishwashing composition may weigh from 15 to 30 g and a water-softening composition may weigh from 15 to 40 g.

The composition (s) may be a solid. For example, it may be a particulate or granulated solid, or a tablet. It may also be a liquid, which may be thickened or gelled if desired. The liquid composition may be non-aqueous (i.e. anhydrous) or aqueous, for example comprising less than or more than 5 wt% total or free water. An anhydrous composition generally contains less than 1 wt%, preferably less than 0.5 wt% water. The composition may have more than one phase. For example it may comprise an aqueous composition and a liquid composition which is immiscible with the aqueous composition. It may also comprise a liquid composition and a separate solid composition, for example in the form of a ball, or pill or speckles. The liquid composition may be thickened or gelled.

If the composition is an aqueous liquid having a relatively high water content, for example above 5 wt% water, it may be necessary to take steps to ensure that the liquid does not attack the water-soluble polymer if it is soluble in cold water, or water up to a temperature of, say, 35°C. Steps may be taken to treat the inside surfaces of the container, for example by coating it with agents such as PVdC (poly(vinylidene dichloride)) or PTFE (polytetrafluoroethylene), or to adapt the composition to ensure it does not dissolve the polymer. For example, it has been found that ensuring the composition has a high ionic strength or contains an agent which minimises water loss through the walls of the container will prevent the composition form dissolving the polymer from the inside. This is described in more detail in EP-A-518,689 and WO 97/27,743.

The containers may have any desired shape. For example the container can have a irregular or regular geometrical shape such as a cube, cuboid, pyramid, dodecahedron or cylinder. The cylinder may have any desired cross-section, such as a circular, triangular or square cross-section.

If the container has two or more compartments, the individual compartments need not necessarily be regular or identical. For example, if the final container has a cuboid shape, the individual compartments may have different sizes to accommodate different quantities of compositions.

The compartments may have the same or different size and/or shape. In general, if it is desired to have compartments containing different quantities of components, the compartments have volume ratios of from 2:1 to 20:1, especially from 4:1 to 10:1.

The container may also have a hook portion so that it can be hung, for example, from an appropriate place inside a dishwashing machine.

The containers produced by the process of the present invention may, if desired, have a maximum dimension of 5 cm, excluding any flanges. For example, a container may have a length of 1 to 5 cm, especially 3.5 to 4.5 cm, a width of 1.5 to 3.5 cm, especially 2 to 3 cm, and a height of 1 to 2 cm, especially 1.25 to 1.75 cm.

If more than one composition is present, the compositions may be appropriately chosen depending on the desired use of the article.

If the article is for use in laundry washing, the primary composition may comprise, for example, a detergent, and the secondary composition may comprise a bleach, stain remover, water-softener, enzyme or fabric conditioner. The article is adapted to release the compositions at different times during the laundry wash. For example, a bleach or fabric conditioner is generally released at the end of a wash, and a water-softener is generally released at the start of a wash. An enzyme may be released at the start or the end of a wash.

If the article is for use as a fabric conditioner, the primary composition may comprise a fabric conditioner and the secondary component may comprise an enzyme which is released before or after the fabric conditioner in a rinse cycle.

If the article is for use in dish washing the primary composition may comprise a detergent and the secondary composition may comprise a water-softener, salt, enzyme, rinse aid, bleach or bleach activator. The article is adapted to release the compositions at different times during the laundry wash. For example, a rinse aid, bleach or bleach activator is generally released at the end of a wash, and a water-softener, salt or enzyme is generally released at the start of a wash.

Examples of surface care compositions are those used in the field of surface care, for example to clean, treat or polish a surface. Suitable surfaces are, for example, household surfaces such as worktops, as well as surfaces of sanitary ware, such as sinks, basins and lavatories.

The ingredients of each composition depend on the use of the composition. Thus, for example, the composition may contain surface active agents such as an anionic, non-ionic, cationic, amphoteric or zwitterionic surface active agents or mixtures thereof.

Examples of anionic surfactants are straight-chained or branched alkyl sulfates and alkyl polyalkoxylated sulfates, also known as alkyl ether sulfates. Such surfactants may be produced by the sulfation of higher C₈-C₂₀ fatty alcohols.

Examples of primary alkyl sulfate surfactants are those of formula:

ROSO₃⁻M⁺

wherein R is a linear C₈-C₂₀ hydrocarbyl group and M is a water-solubilising cation. Preferably R is C₁₀-C₁₆ alkyl, for example C₁₂-C₁₄, and M is alkali metal such as lithium, sodium or potassium.

Examples of secondary alkyl sulfate surfactants are those which have the sulfate moiety on a "backbone" of the molecule, for example those of formula:

CH₃(CH₂)ₙ(CHOSO₃⁻M⁺)(CH₂)ₘCH₃

wherein m and n are independently 2 or more, the sum of m+n typically being 6 to 20, for example 9 to 15, and M is a water-solubilising cation such as lithium, sodium or potassium.

Especially preferred secondary alkyl sulfates are the (2,3) alkyl sulfate surfactants of formulae:

CH₃(CH₂)ₓ(CHOSO₃⁻M⁺)CH₃

and

CH₃(CH₂)ₓ(CHOSO₃⁻M⁺) CH₂CH₃

for the 2-sulfate and 3-sulfate, respectively. In these formulae x is at least 4, for example 6 to 20, preferably 10 to 16. M is cation, such as an alkali metal, for example lithium, sodium or potassium.

Examples of alkoxylated alkyl sulfates are ethoxylated alkyl sulfates of the formula:

RO(C₂H₄O)ₙSO₃⁻M⁺

wherein R is a C₈-C₂₀ alkyl group, preferably C₁₀-C₁₈ such as a C₁₂-C₁₆, n is at least 1, for example from 1 to 20, preferably 1 to 15, especially 1 to 6, and M is a salt-forming cation such as lithium, sodium, potassium, ammonium, alkylammonium or alkanolammonium. These compounds can provide especially desirable fabric cleaning performance benefits when used in combination with alkyl sulfates.

The alkyl sulfates and alkyl ether sulfates will generally be used in the form of mixtures comprising varying alkyl chain lengths and, if present, varying degrees of alkoxylation.

Other anionic surfactants which may be employed are salts of fatty acids, for example C₈-C₁₈ fatty acids, especially the sodium or potassium salts, and alkyl, for example C₈-C₁₈, benzene sulfonates.

Examples of nonionic surfactants are fatty acid alkoxylates, such as fatty acid ethoxylates, especially those of formula:

R(C₂H₄O)ₙOH

wherein R is a straight or branched C₈-C₁₆ alkyl group, preferably a C₉-C₁₅, for example C₁₀-C₁₄, alkyl group and n is at least 1, for example from 1 to 16, preferably 2 to 12, more preferably 3 to 10.

The alkoxylated fatty alcohol nonionic surfactant will frequently have a hydrophilic-lipophilic balance (HLB) which ranges from 3 to 17, more preferably from 6 to 15, most preferably from 10 to 15.

Examples of fatty alcohol ethoxylates are those made from alcohols of 12 to 15 carbon atoms and which contain about 7 moles of ethylene oxide. Such materials are commercially marketed under the trademarks Neodol 25-7 and Neodol 23-6.5 by Shell Chemical Company. Other useful Neodols include Neodol 1-5, an ethoxylated fatty alcohol averaging 11 carbon atoms in its alkyl chain with about 5 moles of ethylene oxide; Neodol 23-9, an ethoxylated primary C₁₂-C₁₃ alcohol having about 9 moles of ethylene oxide; and Neodol 91-10, an ethoxylated C₉-C₁₁ primary alcohol having about 10 moles of ethylene oxide.

Alcohol ethoxylates of this type have also been marketed by Shell Chemical Company under the Dobanol trademark. Dobanol 91-5 is an ethoxylated C₉-C₁₁ fatty alcohol with an average of 5 moles ethylene oxide and Dobanol 25-7 is an ethoxylated C₁₂-C₁₅ fatty alcohol with an average of 7 moles of ethylene oxide per mole of fatty alcohol.

Other examples of suitable ethoxylated alcohol nonionic surfactants include Tergitol 15-S-7 and Tergitol 15-S-9, both of which are linear secondary alcohol ethoxylates available from Union Carbide Corporation. Tergitol 15-S-7 is a mixed ethoxylated product of a C₁₁-C₁₅ linear secondary alkanol with 7 moles of ethylene oxide and Tergitol 15-S-9 is the same but with 9 moles of ethylene oxide.

Other suitable alcohol ethoxylated nonionic surfactants are Neodol 45-11, which is a similar ethylene oxide condensation products of a fatty alcohol having 14-15 carbon atoms and the number of ethylene oxide groups per mole being about 11. Such products are also available from Shell Chemical Company.

Further nonionic surfactants are, for example, C₁₀-C₁₈ alkyl polyglycosides, such s C₁₂-C₁₆ alkyl polyglycosides, especially the polyglucosides. These are especially useful when high foaming compositions are desired. Further surfactants are polyhydroxy fatty acid amides, such as C₁₀-C₁₈ N-(3-methoxypropyl) glycamides and ethylene oxide-propylene oxide block polymers of the Pluronic type.

Examples of cationic surfactants are those of the quaternary ammonium type.

The total content of surfactants in the composition is desirably 60 to 95 wt%, especially 75 to 90 wt%. Desirably an anionic surfactant is present in an amount of 50 to 75 wt%, the nonionic surfactant is present in an amount of 5 to 50 wt%, and/or the cationic surfactant is present in an amount of from 0 to 20 wt%. The amounts are based on the total solids content of the composition, i.e. excluding any solvent which may be present.

The compositions, particularly when used as laundry washing or dishwashing compositions, may also independently comprise enzymes, such as protease, lipase, amylase, cellulase and peroxidase enzymes. Such enzymes are commercially available and sold, for example, under the registered trade marks Esperase, Alcalase and Savinase by Nova Industries A/S and Maxatase by International Biosynthetics, Inc. Desirably the enzymes are independently present in the compositions in an amount of from 0.5 to 3 wt%, especially 1 to 2 wt%, when added as commercial preparations they are not pure and this represents an equivalent amount of 0.005 to 0.5 wt% of pure enzyme.

The compositions may, if desired, independently comprise a thickening agent or gelling agent. Suitable thickeners are polyacrylate polymers such as those sold under the trade mark CARBOPOL, or the trade mark ACUSOL by Rohm and Haas Company. Other suitable thickeners are xanthan gums. The thickener, if present, is generally present in an amount of from 0.2 to 4 wt%, especially 0.5 to 2 wt%.

Compositions used in dishwashing independently usually comprise a detergency builder. The builders counteract the effects of calcium, or other ion, water hardness. Examples of such materials are citrate, succinate, malonate, carboxymethyl succinate, carboxylate, polycarboxylate and polyacetyl carboxylate salts, for example with alkali metal or alkaline earth metal cations, or the corresponding free acids. Specific examples are sodium, potassium and lithium salts of oxydisuccinic acid, mellitic acid, benzene polycarboxylic acids, C₁₀-C₂₂ fatty acids and citric acid. Other examples are organic phosphonate type sequestering agents such as those sold by Monsanto under the trade mark Dequest and alkylhydroxy phosphonates. Citrate salts and C₁₂-C₁₈ fatty acid soaps are preferred. Further builders are; phosphates such as sodium, potassium or ammonium salts of mono-, di- or tri-poly or oligo-phosphates; zeolites; silicates, amorphous or structured, such as sodium, potassium or ammonium salts.

Other suitable builders are polymers and copolymers known to have builder properties. For example, such materials include appropriate polyacrylic acid, polymaleic acid, and polyacrylic/polymaleic and copolymers and their salts, such as those sold by BASF under the trade mark Sokalan.
The builder is desirably present in an amount of up to 90 wt%, preferably 15 to 90 wt%, more preferable 15 to 75 wt%, relative to the total weight of the composition. Further details of suitable components are given in, for example, EP-A-694,059, EP-A-518,720 and WO 99/06522.

The compositions can also optionally comprise one or more additional ingredients. These include conventional detergent composition components such as further surfactants, bleaches, bleach enhancing agents, builders, suds boosters or suds suppressors, anti-tarnish and anticorrosion agents, organic solvents, co-solvents, phase stabilisers, emulsifying agents, preservatives, soil suspending agents, soil release agents, germicides, pH adjusting agents or buffers, non-builder alkalinity sources, chelating agents, clays such as smectite clays, enzyme stabilizers, anti-limescale agents, colourants, dyes, hydrotropes, dye transfer inhibiting agents, brighteners, and perfumes. If used, such optional ingredients will generally constitute no more than 10 wt%, for example from 1 to 6 wt%, the total weight of the compositions.

Compositions which comprise an enzyme may optionally contain materials which maintain the stability of the enzyme. Such enzyme stabilizers include, for example, polyols such as propylene glycol, boric acid and borax. Combinations of these enzyme stabilizers may also be employed. If utilized, the enzyme stabilizers generally constitute from 0.1 to 1 wt% of the compositions.

The compositions may optionally comprise materials which serve as phase stabilizers and/or co-solvents. Examples are C₁-C₃ alcohols such as methanol, ethanol and propanol. C₁-C₃ alkanolamines such as mono-, di- and triethanolamines can also be used, by themselves or in combination with the alcohols. The phase stabilizers and/or co-solvents can, for example, constitute 0 to 1 wt%, preferably 0.1 to 0.5 wt%, of the composition.

The compositions may optionally comprise components which adjust or maintain the pH of the compositions at optimum levels. The pH may be from, for example, 1 to 13, such as 8 to 11 depending on the nature of the composition. For example a dishwashing composition desirably has a pH of 8 to 11, a laundry composition desirable has a pH of 7 to 9, and a water-softening composition desirably has a pH of 7 to 9. Examples of pH adjusting agents are NaOH and citric acid.

The above examples may be used for dish or fabric washing. In particular dish washing formulations are preferred which are adapted to be used in automatic dish washing machines. Due to their specific requirements specialised formulation is required and these are illustrated below

Amounts of the ingredients can vary within wide ranges, however preferred automatic dishwashing detergent compositions herein (which typically have a 1% aqueous solution pH of above 8, more preferably from 9.5 to 12, most preferably from 9.5 to 10.5) are those wherein there is present: from 5% to 90%, preferably from 5% to 75%, of builder; from 0.1% to 40%, preferably from 0.5% to 30%, of bleaching agent; from 0.1% to 15%, preferably from 0.2% to 10%, of the surfactant system; from 0.0001% to 1%, preferably from 0.001% to 0.05%, of a metal-containing bleach catalyst; and from 0.1% to 40%, preferably from 0.1% to 20% of a water-soluble silicate. Such fully-formulated embodiments typically further comprise from 0.1% to 15% of a polymeric dispersant, from 0.01% to 10% of a chelant, and from 0.00001% to 10% of a detersive enzyme, though further additional or adjunct ingredients may be present. Detergent compositions herein in granular form typically limit water content, for example to less than 7% free water, for better storage stability.

Non-ionic surfactants useful in ADW (Automatic Dish Washing) compositions desirably include surfactant(s) at levels of from 2% to 60% of the composition. In general, bleach-stable surfactants are preferred. Non-ionic surfactants generally are well known, being described in more detail in Kirk Othmer's Encyclopedia of Chemical Technology, 3rd Ed., Vol. 22, pp. 360-379, "Surfactants and Detersive Systems", incorporated by reference herein.

Preferably the ADW composition comprises at least one non-ionic surfactant. One class of non-ionics are ethoxylated non-ionic surfactants prepared by the reaction of a monohydroxy alkanol or alkylphenol with 6 to 20 carbon atoms with preferably at least 12 moles particularly preferred at least 16 moles, and still more preferred at least 20 moles of ethylene oxide per mole of alcohol or alkylphenol.

Particularly preferred non-ionic surfactants are the non-ionic from a linear chain fatty alcohol with 16-20 carbon atoms and at least 12 moles particularly preferred at least 16 and still more preferred at least 20 moles of ethylene oxide per mole of alcohol.

According to one preferred embodiment the non-ionic surfactant additionally comprise propylene oxide units in the molecule. Preferably this PO units constitute up to 25% by weight, preferably up to 20% by weight and still more preferably up to 15% by weight of the overall molecular weight of the non-ionic surfactant. Particularly preferred surfactants are ethoxylated mono-hydroxy alkanols or alkylphenols, which additionally comprises polyoxyethylene-polyoxypropylene block copolymer units. The alcohol or alkylphenol portion of such surfactants constitutes more than 30%, preferably more than 50%, more preferably more than 70% by weight of the overall molecular weight of the non-ionic surfactant.

Another class of non-ionic surfactants includes reverse block copolymers of polyoxyethylene and polyoxypropylene and block copolymers of polyoxyethylene and polyoxypropylene initiated with trimethylolpropane.

Another preferred non-ionic surfactant can be described by the formula:

R¹O[CH₂CH(CH₃)O]ₓ[CH₂CH₂O]_{y}[CH₂CH(OH)R²]

wherein R¹ represents a linear or branched chain aliphatic hydrocarbon group with 4-18 carbon atoms or mixtures thereof, R² represents a linear or branched chain aliphatic hydrocarbon rest with 2-26 carbon atoms or mixtures thereof, x is a value between 0.5 and 1.5 and y is a value of at least 15.

Another group of preferred nonionic surfactants are the end-capped polyoxyalkylated non-ionics of formula:

R¹O [CH₂CH(R³)O]ₓ[CH₂]ₖCH(OH) [CH₂]ⱼOR²

wherein R¹ and R² represent linear or branched chain, saturated or unsaturated, aliphatic or aromatic hydrocarbon groups with 1-30 carbon atoms, R³ represents a hydrogen atom or a methyl, ethyl, n-propyl, iso-propyl, n-butyl, 2-butyl or 2-methyl-2-butyl group , x is a value between 1 and 30 and, k and j are values between 1 and 12, preferably between 1 and 5. When the value of x is ≥ 2 each R³ in the formula above can be different. R¹ and R² are preferably linear or branched chain, saturated or unsaturated, aliphatic or aromatic hydrocarbon groups with 6-22 carbon atoms, where group with 8 to 18 carbon atoms are particularly preferred. For the group R³ H, methyl or ethyl are particularly preferred. Particularly preferred values for x are comprised between 1 and 20, preferably between 6 and 15.

As described above, in case x≥2, each R³ in the formula can be different. For instance, when x=3, the group R³ could be chosen to build ethylene oxide (R³=H) or propylene oxide (R³=methyl) units which can be used in every single order for instance (PO)(EO)(EO), (EO)(PO)(EO), (EO)(EO)(PO), (EO) (EO) (EO) , (PO) (EO) (PO), (PO) (PO) (EO) and (PO) (PO) (PO). The value 3 for x is only an example and bigger values can be chosen whereby a higher number of variations of (EO) or (PO) units would arise.

Particularly preferred end-capped polyoxyalkylated alcohols of the above formula are those where k=1 and j=1 originating molecules of simplified formula:
R¹O[CH₂CH(R³)O]ₓCH₂CH(OH)CH₂OR²

The use of mixtures of different non-ionic surfactants is particularly preferred in ADW formulations for example mixtures of alkoxylated alcohols and hydroxy group containing alkoxylated alcohols.

If more than one composition is present in the containers, the compositions may be the same or different. If they are different, they may, nevertheless, have one or more individual components in common.

The containers may themselves be packaged in outer containers if desired, for example non-water soluble containers which are removed before the water-soluble containers are used.

The containers, especially when used for a fabric care, surface care or dishwashing composition, may have a maximum dimension of 5 cm, excluding any flanges. For example, a container may have a length of 1 to 5 cm, especially 3.5 to 4.5 cm, a width of 1.5 to 3.5 cm, especially 2 to 3 cm, and a height of 1 to 2 cm, especially 1.25 to 1.75 cm.

In multi-compartment containers the primary composition and the secondary composition may be appropriately chosen depending on the desired use of the article.

If the article is for use in laundry washing, the first composition may comprise, for example, a detergent, and the second composition may comprise a bleach, stain remover, water-softener, enzyme or fabric conditioner. The article may be adapted to release the compositions at different times during the laundry wash. For example, a bleach or fabric conditioner is generally released at the end of a wash, and a water-softener is generally released at the start of a wash. An enzyme may be released at the start or the end of a wash.

If the article is for use as a fabric conditioner, the first composition may comprise a fabric conditioner and the second composition may comprise an enzyme which is released before or after the fabric conditioner in a rinse cycle.

If the article is for use in dish washing the first composition may comprise a detergent and the second composition may comprise a water-softener, salt, enzyme, rinse aid, bleach or bleach activator. The article may be adapted to release the compositions at different times during the laundry wash. For example, a rinse aid, bleach or bleach activator is generally released at the end of a wash, and a water-softener, salt or enzyme is generally released at the start of a wash. The article may also have more than two compartments adapted to release compositions at different times. For example a three compartment container may contain a bleach, a bleach activator and an enzyme in different compartments. A four compartment container may also contain a water-softening ingredient in a fourth compartment. The containers may themselves be packaged in outer containers if desired, for example non-water soluble containers which are removed before the water-soluble containers are used.

In use the container are simply added to water where the dissolve. Thus they may be added in the usual way to a dishwasher or laundry machine, especially in the dishwashing compartment or a drum. They may also be added to a quantity of water, for example in a bucket or trigger-type spray.

### EXAMPLES

The present invention is now further illustrated in the following Examples.

We assessed the advantage of the use of atomised aqueous compositions compared with other methods of water application on water-soluble plastic (PVOH) in various forms.

Welds - These were made in three types:
a) between two flat portions of moulded PVOH approximately 0.5mm thick.
b) between one flat moulded PVOH piece 0.5 mm and flexible PVOH film 60 micron thick.
c) between two pieces of 60 micron thick flexible PVOH film.

Application - Three different methods of application of water were used:
1) The method as described in the invention
2) By direct spray using a standard air brush
3) By direct contact from a wet roller made of soft foam plastic.

After water application, the two parts were lightly pressed together immediately after which a slight lateral force was momentarily exerted by hand to assess the initial seal. The two parts were then held together, by hand, for 10 secs.

The adhesion was then qualitatively examined after 10 mins. and after 24 hrs

### Results were as follows:-

Initial seal - For the welds made by 1) the initial seal was high. The two parts could not be moved over each other.

For the other two application methods, the two surfaces were quite 'slippery'.

After 10 mins - all welds made by 1) were unable to be separated without damage or rupture of one or both or both of the surfaces.

Those made by the other applications showed some adhesion, but were readily separated.

After 24 hrs - once fully dried all the tests showed strong adhesion.

From this work we can see that although all application methods produce good welds once they are totally dry, only those made by the method of the invention gave any observable initial good adhesion within a short period.

These qualities are of great importance in a production environment where the stresses involved in handling and onward processing require a good initial adhesion to prevent leakage of the contents.

A further advantage is the absence of deformation of film, which is both unsightly and uncontrollable, this was found with methods 2) and 3).

## Claims

1. A process for sealing a surface of a first water-soluble member to a surface of a second water-soluble member, wherein an atomised aqueous composition is applied to at least one of the surfaces and the surfaces are contacted together to form a seal **characterised in that** the atomised aqueous composition has a mean volume diameter Dv(50) of less than 40µm, wherein the first and second water-soluble member is a water-soluble poly(vinyl alcohol) (PVOH) member, and wherein the first or second member is a film, wherein the atomised aqueous composition is applied in the form of a mist.

2. A process according to claim 1 wherein the atomised aqueous composition is applied to both surfaces.

3. A process according to claim 1 or 2 wherein the aqueous composition is water or an aqueous solution of the same composition of either or both of the first water-soluble member and the second water-soluble member.

4. A process according to claim 3 wherein the aqueous composition is an aqueous solution of a salt.

5. A process according to claim 3 or 4 wherein the aqueous composition comprises at least 75 wt% water.

6. A process according to any one of the preceding claims wherein the first member and/or second member has been thermoformed or moulded.

7. A process according to any one of the preceding claims wherein the first member and/or the second member is in the form of a pocket or receptacle and a container which contains a composition is prepared.

8. A process according claim 7 wherein the container comprises at least two compartments.

9. A process according to claim 8 wherein the container is an injection-moulded container comprising at least two compartments, a first compartment containing a first composition and having a first opening closed by a first film and a second compartment containing a second composition and having a second opening closed by a second film, wherein the first film and the second film have the same or different water dissolution characteristics.

10. A process according to any one of claims 7, 8 or 9 wherein the composition is a fabric care, surface care or dishwashing, water-softening, laundry, detergent, rinse aid disinfectant, antibacterial or antiseptic composition.

11. A process according to any one of claims 7 to 10 wherein the composition is a refill composition for a trigger-type spray.

## Patentansprüche

1. Verfahren zum Ansiegeln einer Oberfläche eines ersten wasserlöslichen Elements an eine Oberfläche eines zweiten wasserlöslichen Elements, wobei eine zerstäubte wässrige Zusammensetzung auf wenigstens eine der Oberflächen aufgetragen wird und die Oberflächen miteinander in Berührung gebracht werden, um eine Versiegelung zu bilden, **dadurch gekennzeichnet, dass** die zerstäubte wässrige Zusammensetzung einen mittleren Volumendurchmesser Dv(50) von weniger als 40 µm aufweist, wobei das erste und zweite wasserlösliche Element ein wasserlösliches Poly(vinylalkohol)-(PVOH-) -Element ist und wobei das erste oder zweite Element eine Folie ist, wobei die zerstäubte wässrige Zusammensetzung in Form eines Nebels aufgetragen wird.

2. Verfahren gemäß Anspruch 1, wobei die zerstäubte wässrige Zusammensetzung auf beide Oberflächen aufgetragen wird.

3. Verfahren gemäß Anspruch 1 oder 2, wobei die wässrige Zusammensetzung Wasser oder eine wässrige Lösung derselben Zusammensetzung wie eines oder beide der ersten und zweiten wasserlöslichen Elemente ist.

4. Verfahren gemäß Anspruch 3, wobei die wässrige Zusammensetzung eine wässrige Lösung eines Salzes ist.

5. Verfahren gemäß Anspruch 3 oder 4, wobei die wässrige Zusammensetzung wenigstens 75 Gew.-% Wasser enthält.

6. Verfahren gemäß einem der vorhergehenden Ansprüche, wobei das erste Element und/oder zweite Element thermogeformt oder geformt ist.

7. Verfahren gemäß einem der vorhergehenden Ansprüche, wobei das erste Element und/oder das zweite Element die Form einer Tasche oder eines Gefäßes hat und ein Behälter bereitgestellt wird, der eine Zusammensetzung enthält.

8. Verfahren gemäß Anspruch 7, wobei der Behälter wenigstens zwei Abteile umfasst.

9. Verfahren gemäß Anspruch 8, wobei der Behälter ein spritzgegossener Behälter ist, der wenigstens zwei Abteile umfasst, wobei ein erstes Abteil eine erste Zusammensetzung enthält und eine erste Öffnung aufweist, die mit einer ersten Folie verschlossen ist, und ein zweites Abteil eine zweite Zusammensetzung enthält und eine zweite Öffnung aufweist, die mit einer zweiten Folie verschlossen ist, wobei der erste Film und der zweite Film dieselben oder unterschiedliche Wasserlöslichkeitseigenschaften haben.

10. Verfahren gemäß einem der Ansprüche 7, 8 oder 9, wobei die Zusammensetzung eine Textilpflege-, Oberflächenpflege- oder Geschirrspül-, Wasserenthärtungs-, Wasch-, Detergens-, Klarspül-, desinfizierende, antibakterielle oder antiseptische Zusammensetzung ist.

11. Verfahren gemäß einem der Ansprüche 7 bis 10, wobei die Zusammensetzung eine Nachfüllzusammensetzung für ein Triggerspray ist.

## Revendications

1. Un procédé pour sceller une surface d'un premier membre soluble dans l'eau à une surface d'un second membre soluble dans l'eau, où une composition aqueuse atomisée est appliquée à au moins une des surfaces et les surfaces sont mises en contact ensemble pour former un scellage **caractérisé en ce que** la composition aqueuse atomisée a un diamètre de volume moyen Dv (50) de moins de 40 µm où le premier et second membre soluble dans l'eau est un membre alcool polyvinylique soluble dans l'eau (PVOH) et où le premier ou second membre est un film où la composition aqueuse atomisée est appliquée dan la forme d'un brouillard.

2. Un procédé selon la revendication 1 où la composition aqueuse atomisée est appliquée aux deux surfaces.

3. Un procédé selon la revendication 1 ou 2 où la composition aqueuse est de l'eau ou une composition aqueuse de la même composition que l'un ou les deux du premier membre soluble dans l'eau et du second membre soluble dans l'eau.

4. Un procédé selon la revendication 3 où la composition aqueuse est une solution aqueuse d'un sel.

5. Un procédé selon la revendication 3 ou 4 où la composition aqueuse comprend au moins 75% pds d'eau.

6. Un procédé selon l'une des revendications précédentes où le premier membre et/ou le second membre a été thermoformé ou moulé.

7. Un procédé selon l'une des revendications précédentes où le premier membre et/ou le second membre est dans la forme d'une poche ou récipient et un conteneur qui contient une composition est préparé.

8. Un procédé selon la revendication 7 où le conteneur comprend au moins deux compartiments.

9. Un procédé selon la revendication 8 où le conteneur est un conteneur moulé par injection comprenant au moins deux compartiments, un premier compartiment contenant une première composition et ayant une première ouverture fermée par un premier film et un second compartiment contenant une seconde composition et ayant une seconde ouverture fermée par un second film où le premier film et le second film ont des caractéristiques de dissolution dans l'eau identiques ou différentes.

10. Un procédé selon l'une des revendications 7, 8 ou 9 où la composition est une composition de soin des tissus, de soin des surfaces ou pour lave vaisselle, adoucissante de l'eau, de lessive, détergente, adjuvant de rinçage, désinfectante, antibactérielle ou antiseptique.

11. Un procédé selon l'une des revendications 7 à 10 où la composition est une composition de recharge pour un pulvérisateur de type à gâchette.
